# EUROPEAN PATENT SPECIFICATION

(11) **EP 2 479 649 B1**
(45) Date of publication and mention of the grant of the patent: **19.07.2017**
(21) Application number: 11151404.8
(22) Date of filing: 19.01.2011
(51) Int. Cl.: G06F 3/0354

(54) **Foldable mouse**
Zusammenklappbare maus
Souris d'ordinateur du type pliable

(43) Date of publication of application: 25.07.2012
(73) Proprietor: Giga-Byte Technology Co., Ltd., New Taipei City 231 (TW)
(72) Inventor: Chen, Shu-I, Taipei County (TW); Ma, Mou-Ming, Taipei County (TW)
(74) Representative: Becker Kurig Straus

(56) References cited:
- WO-A2-2006/013343
- JP-A- 10 133 813
- JP-A- 2000 029 625

## Description

### BACKGROUND OF THE INVENTION

### Field of the Invention

The present invention generally relates to a mouse, in particular, to a foldable mouse having a folding function.

### Description of the Related Art

A mouse, as an input device used with Windows interface applications, may control a display position of a cursor on a screen, and open the applications or perform other relevant functions by clicking functional keys. Currently, for the population of using personal computers, the mouse is the most common input device next to the keyboard.

The mouse can be used in a desktop or notebook computer. Although the cursor control on the screen of the notebook computer may be replaced by a touch pad disposed on the computer body, most users are used to using the notebook computer in combination with the mouse. Therefore, it is common that users additionally install the mouse for use.

A currently common mouse may be a mouse connected to a computer through a signal transmission line for use or a wireless mouse using a wireless transmission manner without any transmission line. The wireless mouse is not restricted by the transmission line in operation, and thus is movable in a wider range. In spite of the small volume of the mouse, in order to conform to ergonomics, the mouse is usually thick in appearance, so as to provide a comfortable grip feeling for users. Although appearance of the mouse usually causes trouble in carrying or receiving. Especially when the mouse is carried with a notebook computer to be used outside, as the mouse is received in a special receiving bag of the notebook computer, the mouse occupies a lot of space, and if the thickness of the bag is insufficient, the bag bulges out, thereby affecting the appearance.

JP2000 029625 A discloses a case body formed in a triangle shape and provided with a front surface part case body, a bottom surface part case body, and a back surface part case body. The front surface part case body and the bottom surface part case body are connected by a first shaft and moved with the first shaft as a center. The back surface part case body and the bottom surface part case body are connected by a second shaft and moved with the second shaft as the center. The front surface part case body and the back surface part case body are separated or fixed at an end part on the opposite side of the first shaft and the second shaft and carriage is facilitated.

WO 2006/013343 A2 discloses a mouse collapsible between a flat configuration in which the mouse is generally planer, and an optional popped configuration in which the mouse has increased volume and forms a generally curved ergonomic profile, where said mouse can be used for wireless data input and control and is operate a in either configuration, and can be conveniently attached when flat with a docking cradle or tray that slides into a card-shaped recess. The mouse may support a combination of buttons and capacitance panels for increased control.

JP 10 133813 A discloses a mouse device composed of a track ball, buttons, y housing which contains mouse function parts, and a holding part which is adjacent to the housing and formed freely foldable. The upper surface of the holding part is formed by covers being board materials, and the housing and the covers are combined by a hinge member respectively. By folding the hinge member and wrapping over the covers on the housing, the holding part is contracted and the mouse device is made small.

### SUMMARY OF THE INVENTION

The present invention is provided by appended claim 1. Beneficial embodiments are provided in the dependent claims. Accordingly, the present invention is directed to a foldable mouse convenient to be received or carried.

The present invention provides a foldable mouse, which includes a first bottom plate, a second bottom plate, a first top plate, a second top plate, and two flexible side edge covers. The first bottom plate and the second bottom plate are partially stacked together, and are suitable for relative movement. The first top plate has a first end and a second end, in which the first end pivots to a side of the first bottom plate away from the second bottom plate. The second top plate has a third end and a fourth end, in which the fourth end pivots to a side of the second bottom plate away from the first bottom plate. The two flexible side edge covers are connected to two side edges of the first top plate and the second top plate and two side edges of the first bottom plate and the second bottom plate.

In an embodiment of the foldable mouse of the present invention, the first top plate further has a first fastening structure disposed at the second end, the second top plate further has a second fastening structure disposed at the third end, and the first fastening structure is suitable for fastening to the second fastening structure. One of the first fastening structure and the second structure is a protruding part, and the other is a the flexible side edge covers is foam or rubber.

In an embodiment of the foldable mouse of the present invention, the foldable mouse further includes a circuit board disposed on the first bottom plate, in which the first bottom plate is located on the second bottom plate. Alternatively, the second bottom plate is located on the first bottom plate, and the foldable mouse further includes an overhead rack disposed on the first bottom plate, and the circuit board is disposed on the overhead rack, so that the circuit board is at a distance from the first bottom plate.

In an embodiment of the foldable mouse of the present invention, the third end of the second top plate is rotated relatively about the fourth end to approach the second bottom plate, the second bottom plate is moved relative to the first bottom plate to approach the first end of the first top plate, and the second end of the first top plate is rotated relatively about the first end to be placed on the second top plate, so as to reduce a whole volume of the foldable mouse.

Based on the above, in the foldable mouse of the present invention, the first top plate and the second top plate may relatively approach the first bottom plate and the second bottom plate, and the first bottom plate and the second bottom plate are moved relative to each other to be stacked together, so as to reduce the whole volume of the foldable mouse and facilitate receiving or carrying.

In order to make the aforementioned features and advantages of the present invention more comprehensible, embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic three-dimensional view of a foldable mouse according to an embodiment of the present invention.
FIG. 2 is a schematic view of the foldable mouse in FIG. 1 without showing a first top plate and a second top plate.
FIG. 3 is a schematic sectional view of the foldable mouse in FIG. 1.
FIGs. 4 to 6 are schematic cutaway views illustrating a process of folding the foldable mouse in FIG. 3 for receiving.
FIG. 7 is a schematic view of a foldable mouse according to another embodiment of the present invention in a used state.
FIG. 8 is a schematic view of the foldable mouse in FIG. 7 in a received state.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

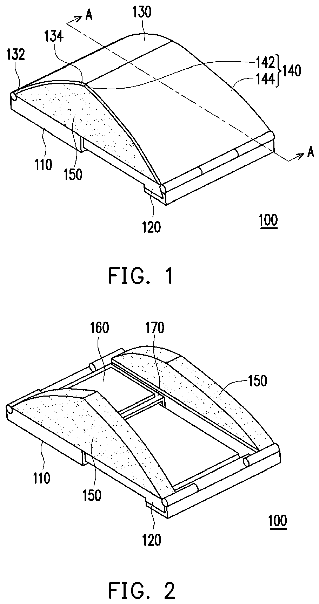

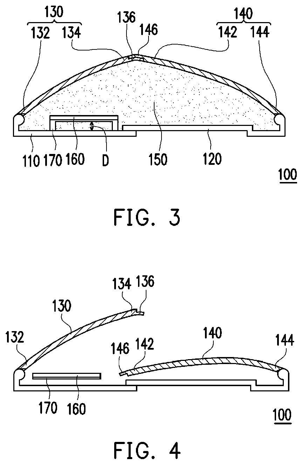

FIG. 1 is a schematic three-dimensional view of a foldable mouse according to an embodiment of the present invention, FIG. 2 is a schematic view of the foldable mouse in FIG. 1 without showing a first top plate and a second top plate, and FIG. 3 is a schematic sectional view of the foldable mouse in FIG. 1 along a section line A-A. Referring to FIGs. 1, 2, and 3 at the same time, the foldable mouse 100 of this embodiment includes a first bottom plate 110, a second bottom plate 120, a first top plate 130, a second top plate 140, and two flexible side edge covers 150. The first bottom plate 110 and the second bottom plate 120 are partially stacked together, and are suitable for relative movement. The first top plate 130 has a first end 132 and a second end 134, in which the first end 132 pivots to a side of the first bottom plate 110 away from the second bottom plate 120. The second top plate 140 has a third end 142 and a fourth end 144, in which the fourth end 144 pivots to a side of the second bottom plate 120 away from the first bottom plate 110. The two flexible side edge covers 150 are connected to two side edges of the first top plate 130 and the second top plate 140 and two side edges of the first bottom plate 110 and the second bottom plate 120.

Based on the above, in order to bear the force of a user applied to the foldable mouse 100 in use, and prevent the whole foldable mouse 100 from being too heavy, the first bottom plate 110, the second bottom plate 120, the first top plate 130, and the second top plate 140 of the foldable mouse 100 are all made of plastic, in which the first top plate 130 further has a first fastening structure 136 disposed at the second end 134, and the second top plate 140 further has a second fastening structure 146 disposed at the third end 142.

In a used state, the first fastening structure 136 and the second fastening structure 146 of the foldable mouse 100 are fastened to each other, in which the first fastening structure 136 is a recessed part, and the second fastening structure 146 is a protruding part. The first top plate 130 and the second top plate 140 fixed together are in an arch shape, so that the user may rest his/her palm on the first top plate 130 and the second top plate 140 when gripping the foldable mouse 100. Persons skilled in the art may change the shape of the first fastening structure 136 and the second fastening structure 146 according to actual requirements. In addition, the foldable mouse 100 of this embodiment further includes a circuit board 160 disposed on the first bottom plate 110, in which the second bottom plate 120 is located on the first bottom plate 110, and a small part of the second bottom plate 120 is stacked on the first bottom plate 110.

FIGs. 4 to 6 are schematic cutaway views illustrating a process of folding the foldable mouse in FIG. 3 for receiving. It should be noted that, FIG. 3 is a sectional view, so as viewed along the section line A-A of FIG. 1, frame feet of an overhead rack 170 contacting the first bottom plate 110 can be seen, while FIGs. 4 to 6 are cutaway views, so the frame feet of the overhead rack 170 contacting the first bottom plate 110 are not shown in FIGs. 4 to 6. Referring to FIGs. 3 and 4 at the same time, when the user does not want to continue using the foldable mouse 100 of this embodiment and wants to receive the foldable mouse 100, the user may firstly release the fastening between the first fastening structure 136 and the second fastening structure 146, and then rotate the third end 142 of the second top plate 140 relatively about the fourth end 144 to approach the second bottom plate 120.

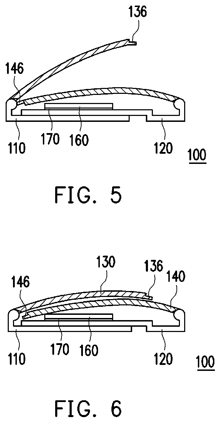

Next, referring to FIGs. 3 and 5 at the same time, the second bottom plate 120 is moved relative to the first bottom plate 110 to a predetermined position in a direction of approaching the first end 132 of the first top plate 130. At this time, the second top plate 140 is below the first top plate 130, and a large part of the second bottom plate 120 is stacked on the first bottom plate 130. In addition, the foldable mouse 100 may further include an overhead rack 170 disposed on the first bottom plate 110, and the circuit board 160 is disposed on the overhead rack 170, so the circuit board 160 is at a distance D from the first bottom plate 110. Because of the disposal of the overhead rack 170, when the second bottom plate 120 is moved relative to the first bottom plate 110 in the direction of approaching the first end 132 of the first top plate 130, the second bottom plate 120 may pass through the distance D between the circuit board 160 and the first bottom plate 110, thereby avoiding the situation that the circuit board 160 is directly disposed on the first bottom plate 110 so that the second bottom plate 120 is limited by the circuit board 160 and cannot move relative to the first bottom plate 110 to the predetermined position, and prevent that the action for subsequently folding the foldable mouse 100 is affected.

Persons of ordinary skill in the art may also change the implementation of elevating the circuit board 160 according to actual requirements. For example, a rib capable of supporting the circuit board 160 may directly extend from the first bottom plate 110, which can also elevate the circuit board 160.

Then, referring to FIG. 6, the second end 134 of the first top plate 130 is rotated relatively about the first end 132, and the first top plate 130 is placed on the second top plate 140, so that the foldable mouse 100 is folded up, and is in a received state. Particularly, a material of the flexible side edge covers 150 in this embodiment is foam or rubber that is deformable by squeezing. Therefore, when the foldable mouse 100 is in the received state, the flexible side edge covers 150 are deformed by squeezing and have a smaller volume than that before squeezing.

Compared with the foldable mouse 100 in the used state (as shown in FIG. 3), the size of the foldable mouse 100 in the received state (as shown in FIG. 6) is decreased in both thickness and length, so the whole volume of the foldable mouse 100 is reduced, and the foldable mouse 100 is convenient for the user to carry and receive.

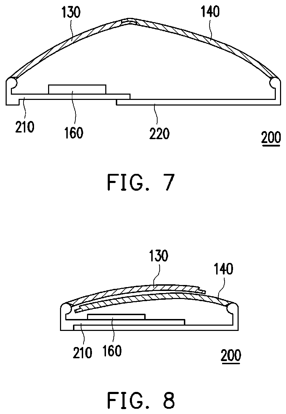

FIG. 7 is a schematic view of a foldable mouse according to another embodiment of the present invention in a used state, and FIG. 8 is a schematic view of the foldable mouse in FIG. 7 in a received state. Referring to FIGs. 7 and 8 at the same time, this embodiment is substantially the same as the above embodiment, and the difference lies in that: in the foldable mouse 200 of this embodiment, a first bottom plate 210 is located on a second bottom plate 220, and the circuit board 160 is directly disposed on the first bottom plate 210. In this way, it is not necessary to dispose the overhead rack 170 (as shown in FIG. 3) on the first bottom plate 210, and the number of elements used in the foldable mouse 200 may be reduced, so as to effectively reduce the cost.

To sum up, when the foldable mouse of the present invention is in the received state, the size of the foldable mouse is decreased in both thickness and length, so the whole volume of the foldable mouse is reduced; and the foldable mouse is convenient for the user to carry and receive.

## Claims

1. A foldable computer mouse (100), comprising:
a first bottom plate (110) and a second bottom plate (120);
a first top plate (130), comprising a first end (132) and a second end (134), wherein the first end (132) pivots to a side of the first bottom plate (110) away from the side of the first bottom plate (110) where the second bottom plate (120) is partially stacked on the first bottom plate (110);
a second top plate (140), comprising a third end (142) and a fourth end (144), wherein the fourth end (144) pivots to a side of the second bottom plate (120) away from the side of the second bottom plate (120) where the first bottom plate (110) is partially stacked under the second bottom plate (120); and
two flexible side edge covers (150), connected to two side edges of the first top plate (130) and the second top plate (140) and two side edges of the first bottom plate (110) and the second bottom plate (120),
wherein the second bottom plate (120) is located on the first bottom plate (110), and a part of the second bottom plate (120) is stacked on the first bottom plate (110) in a used state and in which the second bottom plate (120) can be moved relative to the first bottom plate (110) in a direction of approaching the first end (132) of the first top plate (130), so that a larger part of the second bottom plate (120) is stacked on the first bottom plate (110) in a received state; and wherein the first top plate (130) further comprises a first fastening structure (136) disposed at the second end (134), and the second top plate (140) further comprises a second fastening structure (146) disposed at the third end (142), and the first fastening structure (136) is suitable for fastening to the second fastening structure (146), so that the first top plate(130) and the second top plate (140) fixed together are in an arch shape in said used state; and
wherein the first and second top plates can be rotated about the ends pivotally connected to the respective sides of the first and second bottom plates toward the first and second bottom plates in said received state.

2. The foldable computer mouse (100) according to claim 1, wherein one of the first fastening structure (136) and the second fastening structure (146) is a protruding part, and the other is a recessed part.

3. The foldable computer mouse (100) according to claim 1, wherein a material of the flexible side edge covers (150) is foam or rubber.

4. The foldable computer mouse (100) according to claim 1, further comprising a circuit board (160) disposed on the first bottom plate (110).

5. The foldable computer mouse (100) according to claim 1, wherein the second bottom plate (120) is located on the first bottom plate (110), and the circuit board (160) is at a distance from the first bottom plate (110).

6. The foldable computer mouse (100) according to claim 5, further comprising an overhead rack (170) disposed on the first bottom plate (110), wherein the circuit board (160) is disposed on the overhead rack (170).

7. The foldable computer mouse (100) according to claim 1, wherein the third end (142) of the second top plate (140) is rotated relatively about the fourth end (144) to approach the second bottom plate (120), the second bottom plate (120) is moved relative to the first bottom plate (110) to approach the first end (132) of the first top plate (130), and the second end (134) of the first top plate (130) is rotated relatively about the first end (132) to be placed on the second top plate (140).

## Patentansprüche

1. Faltbare Computermaus (100), umfassend:
eine erste untere Platte (110) und eine zweite untere Platte (120);
eine erste obere Platte (130), die ein erstes Ende (132) und ein zweites Ende (134) umfasst;
wobei das erste Ende (132) zu einer Seite der ersten unteren Platte (110) schwenkbar ist, weg von der Seite der ersten unteren Platte (110), an der die zweite untere Platte (120) teilweise auf die erste untere Platte (110) gestapelt ist;
eine zweite obere Platte (140), die ein drittes Ende (142) und ein viertes Ende (144) umfasst,
wobei das vierte Ende (144) zu einer Seite der zweiten unteren Platte (120) schwenkbar ist, weg von der Seite der zweiten unteren Platte (120), an der die erste untere Platte (110) teilweise unter die zweite untere Platte (120) gestapelt ist; und
zwei flexible Seitenrandabdeckungen (150), die mit zwei Seitenrändern der ersten oberen Platte (130) und der zweiten oberen Platte (140) und zwei Seitenrändern der ersten unteren Platte (110) und der zweiten unteren Platte (120) verbunden sind,
wobei sich die zweite untere Platte (120) an der ersten unteren Platte (110) befindet und wobei ein Teil der zweiten unteren Platte (120) in einem Gebrauchszustand auf die erste untere Platte (110) gestapelt ist und wobei die zweite untere Platte (120) relativ zu der ersten unteren Platte (110) in eine Annäherungsrichtung an das erste Ende (132) der ersten oberen Platte (130) bewegt werden kann, so dass ein großer Teil der zweiten unteren Platte (120) in einem Aufbewahrungszustand auf die erste obere Platte (110) gestapelt wird, und wobei
die erste obere Platte (130) weiterhin eine erste Befestigungsstruktur (136) umfasst, die an dem zweiten Ende (134) angeordnet ist, und die zweite obere Platte (140) weiterhin eine zweite Befestigungsstruktur (146) umfasst, die an dem dritten Ende (142) angeordnet ist, und wobei die erste Befestigungsstruktur (136) geeignet ist zur Befestigung an der zweiten Befestigungsstruktur (146), so dass die aneinander befestigte erste obere Platte (130) und die zweite obere Platte (140) in dem Gebrauchszustand in einer Bogenform sind; und
wobei die erste und die zweite obere Platte in dem Aufbewahrungszustand um die Enden in Richtung der ersten und der zweiten unteren Platte gedreht werden können, die schwenkbar mit der jeweiligen Seite der ersten und der zweiten unteren Platte verbunden sind.

2. Faltbare Computermaus (100) gemäß Anspruch 1, wobei eine der ersten Befestigungsstruktur (136) und der zweiten Befestigungsstruktur (146) ein vorstehendes Teil ist und die andere eine vertieftes Teil ist.

3. Faltbare Computermaus (100) gemäß Anspruch 1, wobei ein Material der flexiblen Seitenrandabdeckungen (150) Schaumstoff oder Gummi ist.

4. Faltbare Computermaus (100) gemäß Anspruch 1, weiterhin umfassend eine Leiterplatte (160), die an der ersten unteren Platte (110) angeordnet ist.

5. Faltbare Computermaus (100) gemäß Anspruch 1, wobei sich die zweite untere Platte (120) an der ersten unteren Platte (110) befindet und die Leiterplatte (160) von der ersten unteren Platte (110) beabstandet ist.

6. Faltbare Computermaus (100) gemäß Anspruch 5, weiterhin umfassend ein Überkopfgestell (170), das an der ersten unteren Platte (110) angeordnet ist, wobei die Leiterplatte an dem Überkopfgestell (170) angeordnet ist.

7. Faltbare Computermaus (100) gemäß Anspruch 1, wobei das dritte Ende (142) der zweiten oberen Platte (140) relativ um das vierte Ende (144) drehbar ist, um sich der zweiten unteren Platte (120) zu nähern, die zweite untere Platte (120) relativ zu der ersten unteren Platte (110) bewegbar ist, um sich dem ersten Ende (132) der ersten oberen Platte (130) anzunähern und das zweite Ende (134) der ersten oberen Platte (130) relativ um das erste Ende (132) rotierbar ist, um an der zweiten oberen Platte (140) platziert zu werden.

## Revendications

1. Souris d'ordinateur du type pliable (100), comprenant :
une première plaque inférieure (110) et une seconde plaque inférieure (120) ;
une première plaque supérieure (130), comprenant une première extrémité (132) et une seconde extrémité (134),
dans laquelle la première extrémité (132) pivote sur un côté de la première plaque inférieure (110) en s'éloignant du côté de la première plaque inférieure (110) où la seconde plaque inférieure (120) est partiellement empilée sur la première plaque inférieure (110) ;
une seconde plaque supérieure (140), comprenant une troisième extrémité (142) et une quatrième extrémité (144),
dans laquelle la quatrième extrémité (144) pivote sur un côté de la seconde plaque inférieure (120) en s'éloignant du côté de la seconde plaque inférieure (120) où la première plaque inférieure (110) est partiellement empilée sous la seconde plaque inférieure (120) ; et
deux recouvrements flexibles de bord latéral (150), raccordés à deux bords latéraux de la première plaque supérieure (130) et de la seconde plaque supérieure (140) et deux bords latéraux de la première plaque inférieure (110) et de la seconde plaque inférieure (120),
dans lequel la seconde plaque inférieure (120) est située sur la première plaque inférieure (110), et une partie de la seconde plaque inférieure (120) est empilée sur la première plaque inférieure (110) dans un état utilisé et dans lequel la seconde plaque inférieure (120) peut être mise en mouvement par rapport à la première plaque inférieure (110) dans une direction d'approche de la première extrémité (132) de la première plaque supérieure (130),
de sorte qu'une plus grande partie de la seconde plaque inférieure (120) soit empilée sur la première plaque inférieure (110) dans un état reçu ;
et dans lequel la première plaque supérieure (130) comprend en outre une première structure de fixation (136) disposée au niveau de la seconde extrémité (134), et la seconde plaque supérieure (140) comprend en outre une seconde structure de fixation (146) disposée au niveau de la troisième extrémité (142), et la première structure de fixation (136) est convenable pour une fixation à la seconde structure de fixation (146), de sorte que la première plaque supérieure (130) et la seconde plaque supérieure (140) fixées ensemble sont en forme d'arc dans ledit état utilisé ; et
dans lequel les première et seconde plaques supérieures peuvent être mises en rotation autour des extrémités raccordées de manière pivotable au côté respectif des première et seconde plaques inférieures en direction des première et seconde plaques inférieures dans ledit état reçu.

2. Souris d'ordinateur du type pliable (100) selon la revendication 1, dans laquelle une de la première structure de fixation (136) et de la seconde structure de fixation (146) consiste en une partie faisant saillie, et l'autre consiste en une partie en creux.

3. Souris d'ordinateur du type pliable (100) selon la revendication 1, dans laquelle un matériau des recouvrements flexibles de bord latéral (150) consiste en de la mousse ou de la gomme.

4. Souris d'ordinateur du type pliable (100) selon la revendication 1, comprenant en outre un circuit imprimé (160) disposé sur la première plaque inférieure (110).

5. Souris d'ordinateur du type pliable (100) selon la revendication 1, dans laquelle la seconde plaque inférieure (120) est situé sur la première plaque inférieure (110), et le circuit imprimé (160) est situé à une distance à partir de la première plaque inférieure (110).

6. Souris d'ordinateur du type pliable (100) selon la revendication 5, comprenant en outre un espace de rangement supérieur (170) disposées sur la première plaque inférieure (110), dans lequel le circuit imprimé (160) est disposé sur l'espace de rangement supérieur (170).

7. Souris d'ordinateur du type pliable (100) selon la revendication 1, dans laquelle la troisième extrémité (142) de la seconde plaque supérieure (140) est mise en rotation de manière relative autour de la quatrième extrémité (144) pour approcher la seconde plaque inférieure (120), la seconde plaque inférieure (120) et déplacé par rapport à la première plaque inférieure (110) pour approcher la première extrémité (132) de la première plaque supérieure (130), et la seconde extrémité (134) de la première plaque supérieure (130) est mise en rotation de manière relative autour de la première extrémité (132) afin d'être placé sur la seconde plaque supérieure (140).
